# FASCICULE DE BREVET EUROPEEN

(11) **EP 1 346 314 B1**
(45) Date de publication et mention de la délivrance du brevet: **21.04.2010**
(21) Numéro de dépôt: 01993902.4
(22) Date de dépôt: 06.11.2001
(51) Int. Cl.: G06K 17/00

(54) **PERSONNALISATION ELECTRIQUE ET IMPRESSION GRAPHIQUE D'UNE CARTE A PUCE EN TEMPS MASQUE**
GLEICHZEITIGE ELEKTRISCHE PERSONALISIERUNG UND GRAPHISCHES DRUCKEN EINER CHIPKARTE
CONCURRENT ELECTRICAL CUSTOMIZATION AND GRAPHIC PRINTING OF A SMART CARD

(30) Priorité: 13.11.2000 FR 0014560
(43) Date de publication de la demande: 24.09.2003
(73) Titulaire: Gemalto SA, 92190 Meudon (FR)
(72) Inventeur: MORGAVI, Paul, F-13600 LA CIOTAT (FR)
(86) Numéro de dépôt international: PCT/FR2001/003418
(87) Numéro de publication internationale: WO 2002/039375

(56) Documents cités:
- EP-A- 0 513 885
- DE-A- 19 641 892
- US-A- 5 198 652
- US-A- 5 426 283

## Description

Le domaine de l'invention est celui de la fabrication d'objets portables intelligents tels que les cartes à puce, et plus spécialement celui de leur personnalisation.

Citons dans ce domaine, le document EP-A-0513885. Il propose la lecture et / ou l'écriture électrique quasi simultanée d'informations : il s'agit donc de personnalisation électrique. Des enregistrements magnétique et d'impression sont effectués sur un ensemble mobile, par déplacements selon la largeur de la carte.

Le document US-A-5426283 de Gemplus, décrit une personnalisation graphique qui est effectuée soit avant, soit après la personnalisation électrique.

Le document US-A-5198652 décrit une prise de photographie à développement instantané, le transfert de cette photographie sur un corps de carte, et avec un autre appareil la programmation d'un circuit avec des informations. Ce document décrit l'equipement du préambule de la revendication 1 et 8.

Citons aussi le document FR-A-2790421 Gemplus qui décrit un équipement sur lequel il est possible d'appliquer l'invention.

Et le document DE-A-19641892 décrit une installation de programmation à plateau tournant où plusieurs cartes sont programmées indépendamment.

Usuellement, dans l'exemple d'une carte à puce, les principales étapes de cette fabrication sont :
- la réalisation d'une part d'un corps de l'objet, ici un corps de carte en plastique ;
- la réalisation d'autre part d'un circuit électronique (mémoire et/ou microprocesseur) ;
- l'encartage, c'est-à-dire l'assemblage du corps et du circuit ;
- l'initialisation par écriture dans le circuit, des données spécifiques à l'application de cet objet ; puis
- la personnalisation par laquelle l'objet est adapté à son porteur et qui est effectuée d'une part sous forme d'écriture électrique et d'autre part sous forme d'ornementation graphique ou en relief.

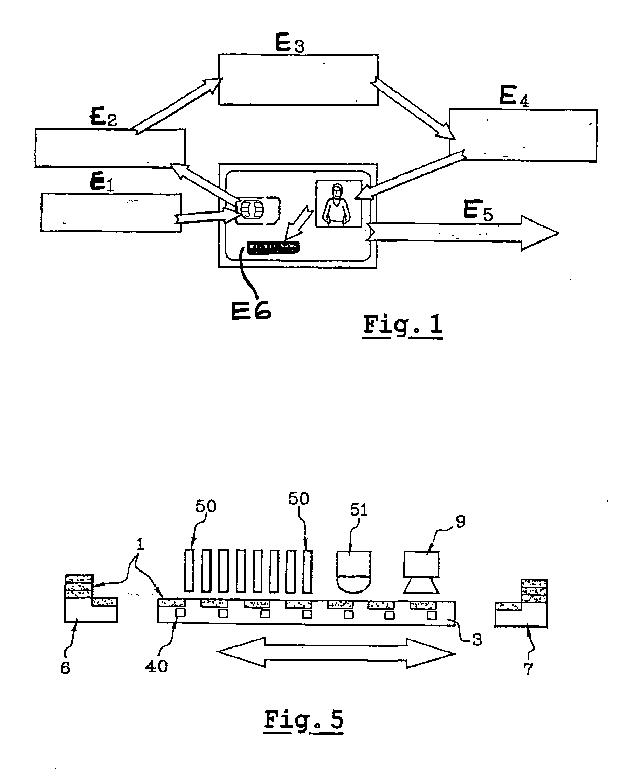

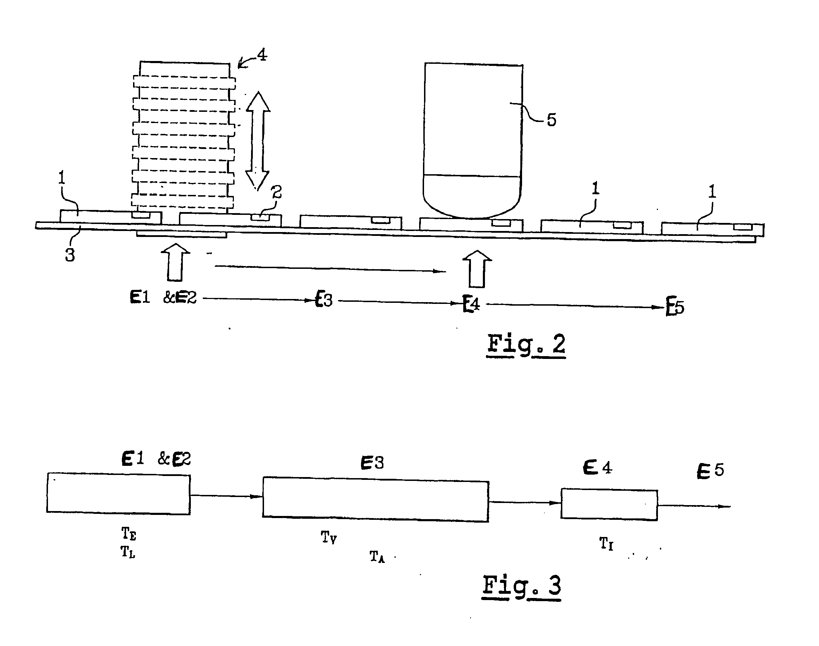

La personnalisation est donc réalisée successivement d'abord par écriture électrique, puis la personnalisation graphique est effectuée. En effet, des données issues de la personnalisation électrique sont souvent utilisées pour obtenir, par interrogation d'une base de données par exemple, les données graphiques correspondant à l'objet à fabriquer. Les différentes étapes de la personnalisation électrique et graphique sont représentées figure 1. Et les différents éléments permettant de réaliser ces étapes sont représentés figure 2. Ces figures sont évoquées en détail plus loin.

On comprend que la personnalisation est réalisée de façon séquentielle par deux systèmes mécaniques qui peuvent éventuellement être soit deux équipements distincts (un par système), soit un équipement regroupant les deux systèmes, chaque système comportant une case rebut pour les cartes présentant des défauts. Les cartes à puce électriquement mais non graphiquement personnalisées sont généralement blanches ou imprimées avec un motif générique pour toutes les cartes ; elles ne peuvent être différenciées les unes des autres en particulier par l'opérateur chargé de la personnalisation électrique et graphique. Il en résulte un risque important d'erreur ou de fraude lorsque la personnalisation graphique n'est pas réalisée sur la bonne carte déjà électriquement personnalisée.

Ce risque augmente lorsque les deux équipements de personnalisation sont en des emplacements distincts, le transfert d'un équipement à l'autre étant alors généralement assuré manuellement par un opérateur.

Par ailleurs, les équipements de personnalisation électrique et de personnalisation graphique ont chacun leur cadence indiquée en regard des étapes de la figure 3. Globalement, la cadence du procédé de personnalisation électrique et graphique est imposée par la cadence la plus importante.

Le temps de personnalisation électrique varie notamment en fonction du type de puce et de l'application. A titre indicatif, le temps moyen de personnalisation électrique d'une puce GSM de téléphonie mobile est par exemple d'environ 12 secondes. Il est alors nécessaire, pour tenir une cadence habituelle de 3600 cartes par heure, soit une carte par seconde, d'augmenter le nombre de têtes de personnalisation électrique : douze (12) dans le cas de cartes à puce GSM.

Au vu de ce qui précède, on comprend qu'un but de l'invention est d'effectuer les personnalisations électrique et graphique en temps masqué, sur une équipement unique.

A cet effet, l'invention a pour objets un procédé et un équipement de personnalisation selon les revendications jointes. L'équipement et le procédé de l'invention sont définis respectivement par les revendications 1 et 8.

La personnalisation électrique et graphique en un même emplacement garantit une sécurité de corrélation des informations électriques et graphiques et évite les fraudes dans la mesure où toute tentative de récupération de carte entre les deux opérations ne permet pas de terminer l'ensemble des deux opérations.

Il résulte de la simultanéité de la personnalisation graphique et électrique, un gain de productivité : au lieu que le temps de personnalisation électrique s'ajoute au temps de personnalisation graphique, le temps le plus court, quel qu'il soit, est masqué par le temps le plus long. On parle parfois d'une personnalisation en temps masqué.

L'invention présente aussi l'avantage de diminuer le parc de équipements et son encombrement, puisque les deux équipements de personnalisation électrique et de personnalisation graphique sont remplacés par une équipement unique.

D'autres particularités de l'invention apparaîtront dans la description d'exemples correspondant aux dessins annexés.
la figure 1 illustre les étapes de personnalisation électrique et graphique,
la figure 2 représente schématiquement les différents éléments permettant de réaliser ces étapes,
la figure 3 présente sous forme de tableau, les temps des différentes étapes de personnalisation électrique et graphique,
les figures 4a) et 4b) illustrent un premier mode de réalisation d'une équipement selon l'invention,
la figure 5 illustre un deuxième mode de réalisation d'une équipement selon l'invention.

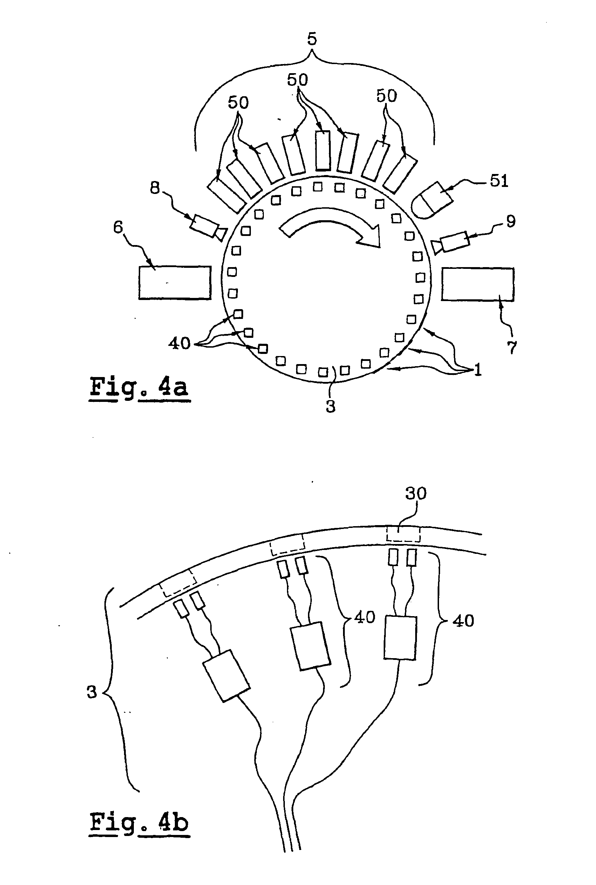

Avant d'évoquer un premier mode de réalisation d'une équipement selon l'invention (figure 4a), revenons sur différentes étapes de la personnalisation électrique et graphique représentées figure 1 :
- la personnalisation électrique prévoit d'écrire des données dans la puce (étape E1: écriture données dans la puce), à les lire (étape E2 : lecture données venant de la puce) et à les vérifier (étape E3 : vérification données et association de données graphiques) ;
- pendant la vérification des données de personnalisation électrique, la première étape de la personnalisation graphique débute. A partir d'un identifiant par exemple, fourni à l'issue de l'étape 2, une unité de traitement récupère dans une base de données, les données graphiques destinées à être imprimées sur la carte puis les associe entre elles ; ces données graphiques sont par exemple constituées de texte tel que les nom et prénom du porteur de la carte (désigné en E6 sur la figure 1), d'un code barre, d'un numéro de série, d'une photo et/ou de dessins, etc (étape 3) ;
- la personnalisation graphique consiste ensuite à réceptionner l'ensemble des données graphiques et à les imprimer sur le corps de la carte à puce (étape E4 : réception données graphiques et impression) ;
- la carte à puce est alors prête pour être utilisée selon son application (étape E5 : application).

Les différents éléments appartenant à une équipement ou équipement de personnalisation permettant de réaliser ces étapes E1, E2, E3, E4 et E5 sont représentés figure 2.

Les cartes 1 comportant une puce 2 sont placées sur un support 3. Ce support 3 se déplace de façon à présenter les puces 2 à un poste de personnalisation électrique 4 simple ou multiple pour réaliser les étapes E1 et E2.

Le poste de personnalisation électrique 4 représenté sur la figure 2 est un poste de personnalisation multiple permettant d'augmenter la cadence. Il comporte un ascenseur qui regroupe plusieurs cartes à puce 1, par exemple 10 cartes puis les répartit devant autant de têtes de personnalisation avant de les transférer pour l'étape suivante.

Les données lues sont soumises à l'unité de traitement chargée de l'étape E3 puis les corps des cartes 1 sont présentés à un poste de personnalisation graphique 5 pour réaliser l'étape E4.

Ici, la personnalisation est séquentielle avec deux systèmes mécaniques qui peuvent éventuellement être soit deux équipements (un par système), soit un équipement regroupant les deux systèmes, chaque système comportant une case rebut pour les cartes présentant des défauts. Les cartes à puce électriquement mais non graphiquement personnalisées sont généralement blanches ou imprimées avec un motif générique pour toutes les cartes ; elles ne peuvent être différenciées les unes des autres en particulier par l'opérateur chargé de la personnalisation électrique et graphique. Il en résulte un risque important d'erreur ou de fraude lorsque la personnalisation graphique n'est pas réalisée sur la bonne carte déjà électriquement personnalisée.

Ce risque augmente lorsque les deux équipements de personnalisation sont en des emplacements distincts, le transfert d'un équipement à l'autre étant alors généralement assuré manuellement par un opérateur.

Par ailleurs, les équipements de personnalisation électrique et de personnalisation graphique ont chacun leur cadence indiquée figure 3.

Aux étapes E1 & E2 d'écriture données / lecture données, on observe ici des temps :
- 250ms <Te < 40s : temps d'écriture données ;
- 100ms < TI < 5s : temps de lecture données.

A l'étape E3 de vérification données et association de données ou "data" graphique, on observe les temps :
- Tv < 250ms : temps de vérification données ;
- 100ms < Ta < 1s : temps d'association data graphique.

A l'étape E4 d'impression, on observe le temps d'impression Ti, tel que : 1s < Ti < 15s.

Globalement, la cadence du procédé de personnalisation électrique et graphique est imposée par la cadence la plus importante.

Le temps de personnalisation électrique varie notamment en fonction du type de puce et de l'application comme exposé plus haut.

Sur la figure 4a, un support 3 des cartes à puce 1 à personnaliser se présente sous la forme d'une roue ou d'un tambour apte à tourner et comportant des emplacements destinés à recevoir les cartes 1, par exemple 36 cartes à puce.

Le poste de personnalisation électrique comporte des têtes de personnalisation électrique 40 réparties et fixées à l'intérieur du tambour 3, vis-à-vis de chaque emplacement de puce des cartes 1. Comme représenté figure 4b), ces emplacements de puces sont matérialisés par des repères 30 se présentant éventuellement sous forme de cavités, ménagés sur le tambour 3.

On se reporte à la figure 4a). Le poste d'impression graphique, fixe, est constitué d'une ou plusieurs têtes d'impression 50 selon que l'on souhaite obtenir une impression monochrome ou en couleurs. Les têtes d'impression graphique 50 sont de préférence situées de l'autre côté de la carte à puce 1 par rapport aux têtes de personnalisation électrique 40.

On peut utiliser des têtes d'impression graphique à 256 jets d'encre par tête. Les encres seront ensuite séchées par un dispositif de séchage 51 des encres, par exemple une lampe à ultraviolets. D'autres dispositifs d'impression peuvent être utilisés, notamment des dispositifs à impression thermique.

Cette équipement comprend bien sûr des dispositifs d'entrée 6 et de sortie 7 des cartes à puce 1. Elle comporte en outre un système de contrôle dimensionnel 8 dés cartes à puce 1 à personnaliser, constitué par exemple d'une caméra et un système de contrôle graphique 9 des cartes à puce imprimées qui peut également être constitué d'une caméra.

Le dispositif d'entrée 6 des cartes à puce 1 place les cartes 1 sur le tambour 3. En tournant, le tambour 1 présente les cartes à puce 1 au système de contrôle dimensionnel 8 des cartes, aux têtes d'impression 50, au dispositif de séchage 51 éventuellement puis au système de contrôle graphique 9.

Pendant la rotation du tambour 3, les cartes à puce 1 sont en contact ou en relation avec les têtes de personnalisation électrique 40. Ainsi, pendant que l'image graphique se forme à la surface de la carte à puce 1, les têtes de personnalisation électrique 40 inscrivent ou lisent des données à l'intérieur de la puce.

Dans le cas des cartes à contact, la puce se trouve affleurant à la surface de la carte. Les têtes de personnalisation électrique 40 comportent alors des contacts électriques par lesquels sont écrites et/ou lues les informations à l'intérieur de la puce. Dans la mesure où les têtes d'impression graphique 50 sont situées de l'autre côté de la carte par rapport aux têtes de personnalisation électrique 40, les informations graphiques sont imprimées sur la face de la carte opposée aux contacts électriques de la carte.

Dans le cas des cartes sans contact, les contacts de la puce sont constitués par une antenne enfouie dans le corps de la carte. Les têtes de personnalisation électrique 40 comportent alors des antennes par lesquelles sont écrites et/ou lues les informations à l'intérieur de la puce.

Dans le cas de cartes mixtes à contact ohmique et par antenne dites " combicard", la puce comporte à la fois des contacts affleurants et une antenne. Les têtes de personnalisation électrique 40 comportent alors des antennes et/ou des contacts électriques.

La personnalisation électrique et graphique peut être obtenue en un seul passage des cartes à puce sous le poste d'impression ou en plusieurs passages. La rotation du tambour permet de réaliser plusieurs passages, par exemple 6. Cette rotation s'effectue de préférence dans un sens mais elle peut s'effectuer dans l'un et/ou l'autre sens.

Un deuxième mode de réalisation d'une équipement selon l'invention est présenté figure 5. On retrouve les mêmes éléments fonctionnels que pour la figure 4a), mais cette fois, le support 3 est plan.

Là encore, la personnalisation graphique peut nécessiter un ou plusieurs passages.

Le poste d'impression comprenant les têtes d'impression 50 peut être fixe comme dans le mode de réalisation précédent. Le support 3 peut alors être animé d'un mouvement translatif constant et unique ou de va-et-vient selon qu'il s'agit d'une impression graphique à passage unique de la carte à puce 1 ou à multiples passages. On peut atteindre des temps d'impression de 4 à 6 secondes.

Le poste d'impression peut au contraire être mobile : ce sont alors les têtes d'impression 50 qui effectuent les passages sur les cartes à puce 1, le support 3 étant fixe. Comme dans le cas précédent, le poste d'impression peut être animé d'un mouvement translatif constant et unique ou de va-et-vient selon qu'il s'agit d'une impression graphique à passage unique de la carte à puce ou à multiples passages. Les performances obtenues sont souvent inférieures à celles du cas précédent.

Selon les deux modes de réalisation présentés, les opérations de personnalisation électrique et graphique sont effectuées automatiquement sans que les cartes à puce soient manipulées par un opérateur et assurent ainsi la cohérence des informations électriques et graphiques.

Il en résulte une sécurité accrue et une diminution des possibilités de fraude.

On améliore aussi la gestion des rebuts électriques ou graphiques. En effet, si l'un des systèmes de contrôle vidéo (systèmes 8 ou 9 figure 4a)) ou de vérification des données électriques (étape E3 figures 1 et 3) détecte qu'une carte 1 n'est pas conforme, la carte à puce 1 peut alors avoir son impression graphique modifiée afin d'indiquer clairement que la carte à puce 1 n'est pas conforme : un texte tel que "rebut" ou "rejet" peut par exemple être ajouté. Le contenu des informations écrites électriquement peut également être bloqué ou effacé pour que l'utilisation de la carte à puce ne soit plus possible.

## Revendications

1. Équipement de personnalisation d'objets portables intelligents tels que cartes à puce (1), lesdits objets portables étant graphiquement personnalisables sur une première face et électriquement personnalisables sur une deuxième face, ledit équipement comprenant:
- un support (3), des moyens de personnalisation électrique (40) de ces objets (1) ;
- un poste d'impression graphique (50) de ces objets (1), **caractérisé en ce qu'**il comprend en outre
- des moyens de déplacement du support (3) par rapport au poste d'impression graphique (50) ou inversement; **en ce que** le support a avec sur une première de ses faces, des emplacements destinés à recevoir les objets (1) à personnaliser et sur l'autre face ledits moyens de personnalisation électrique de ces objects et **en ce que** le poste d impression graphique (50) est disposé du côté de la première face du support et de là première face des objets à personnaliser, de manière à ce que chaque objet porté par le support, lors du déplacement du support par rapport au poste d'impression graphique ou inversement, se trouve simultanément positionné entre un des moyens de personnalisation électrique (40) et ledit poste d'impression graphique (50), le moyen de personnalisation électrique (40) et le poste d'impression graphique (50) agissant au moins en partie simultanément sur cet objet.

2. Équipement selon la revendication 1, **caractérisé en ce que** le support (3) est fixe et le poste d'impression graphique (5) est mobile.

3. Équipement selon la revendication 1, **caractérisé en ce que** le support (3) est mobile et le poste d'impression graphique (5) est fixe.

4. Équipement selon l'une des revendications 1 à 3, **caractérisé en ce que** le support (3) est un tambour, par exemple avec son axe de rotation sensiblement horizontal.

5. Équipement selon l'une des revendications 1 à 4, **caractérisé en ce que** les moyens de personnalisation électrique (40) des cartes comportent des contacts électriques situés au contact des emplacements des puces (30) des objets (1) à personnaliser placés sur le support (3).

6. Équipement selon l'une des revendications 1 à 5, **caractérisé en ce que** les moyens de personnalisation électrique (40) des objets (1) comportent des antennes situées vis-à-vis des emplacements des puces (30) des objets (1) placés sur le support (3), et présentés en regard du poste d'impression graphique (50).

7. Équipement selon l'une des revendications 1 à 6, **caractérisé en ce qu'**il comprend un dispositif de contrôle (8) graphique (9) et/ou électrique des objets (1) à personnaliser et/ou un dispositif de séchage (51) de l'impression.

8. Procédé de personnalisation en continu d'objets portables intelligents tels que cartes à puce (1), lesdits objets portables étant graphiquement personnalisables sur une première face et électriquement personnalisables sur une deuxième face, **caractérisé en ce que** ledit procédé comprend les étapes prévoyant de disposer les objets à personnaliser dans des emplacements prévus sur une première face d'un support, de telle sorte que chaque objet portable puisse être électriquement personnalisé via un moyen de personnalisation électrique (40) disposé sur une deuxième face du support, puis déplacement du support face à un poste d'impression graphique (50) situé du côté de la première face du support et de la première face de l'objet à personnaliser; le déplacement étant effectué de telle sorte que chaque objet à personnaliser est présenté simultanément entre un moyen de personnalisation électrique (40) et le poste d'impression graphique (50), de sorte que lesdits moyen (40) et poste (50) agissent au moins en partie simultanément sur l'objet à personnaliser.

9. Procédé selon la revendication 8, **caractérisé en ce que** la personnalisation électrique (40) est entièrement effectuée durant l'impression (50) graphique.

## Claims

1. Equipment for customizing smart portable objects such as chip cards (1), said portable objects being graphically customizable on a first face and electrically customizable on a second face, with said equipment including:
- a support (3), means (40) for the electric customization of such objects (1);
- a station (50) for the graphic printing of such objects (1),
**characterized in that** it further includes
- means for displacing the support (3) with respect to the graphic printing station (50), or reversely;
and **in that** the support has, on a first one of the faces thereof, locations intended for receiving the objects (1) to be customized and on the other face said means (40) for the electric customization of such objects and **in that**
the graphic printing station (50) is positioned on the side of the first face of the support and the first face of the objects to be customized, so that each object borne by the support, during the displacement of the support with respect to the graphic printing station or reversely, is simultaneously positioned between one of the electric customization means (40) and said graphic printing station (50), the electric customization means (40) and the graphic printing station (50) acting at least partly simultaneously on such an object.

2. Equipment according to claim 1, **characterized in that** the support (3) is fixed and the graphic printing station (5) is movable.

3. Equipment according to claim 1, **characterized in that** the support (3) is movable and the graphic printing station (5) is fixed.

4. Equipment according to one of claims 1 to 3, **characterized in that** the support (3) is a drum, for example with the rotation axis thereof being substantially horizontal.

5. Equipment according to one of claims 1 to 4, **characterized in that** the means (40) of electric customization of the cards include electric contacts placed in contact with the locations of the chips (30) of the objects (1) to be customized placed on the support (3).

6. Equipment according to one of claims 1 to 5 **characterized in that** the means (40) of electric customization of the objects (1) include antennas located opposite the locations of the chips (30) of the objects (1) placed on the support (3), and presented opposite the graphic printing station (50).

7. Equipment according to one of claims 1 to 6, **characterized in that** it includes a device for the graphic (9) and/or electric checking (8) of the objects (1) to be customized and/or a printing drying device (51).

8. A method for the continuous customization of smart portable objects such as chip cards (1), said portable objects being graphically customizable on a first face and electrically customizable on a second face, **characterized in that** said method includes the steps providing to place the objects to be customized in locations provided on a first face of a support, so that each portable object can be electrically customized via electric customization means (40) positioned on a second face of the support, then moving the support opposite a graphic printing station (50) positioned on the side of the first face of the support and the first face of the object to be customized; with the displacement being performed so that each object to be customized is simultaneously presented between electric customization means (40) and the graphic printing station (50), so that said means (40) and station (50) act at least partly simultaneously on the object to be customized.

9. A method according to claim 8, **characterized in that** the electric customization (40) is totally performed during the graphic printing (50).

## Patentansprüche

1. Ausrüstung für die Personalisierung von tragbaren intelligenten Objekten wie Chipkarten (1), wobei die genannten tragbaren Objekte auf einer ersten Seite grafisch und auf einer zweiten Seite elektrisch personalisierbar sind, wobei die genannte Ausrüstung folgendes umfasst:
- einen Träger (3), elektrische Personalisierungsmittel (40) dieser Objekte (1);
- einen grafischen Druckposten (50) dieser Objekte (1),
**dadurch gekennzeichnet, dass** sie unter anderem folgendes umfasst:
- Verschiebemittel des Trägers (3) in Bezug auf den grafischen Druckposten (50) oder umgekehrt; dass der Träger auf einer ersten seiner Seiten Plätze hat, um die zu personalisierenden Objekte (1) aufzunehmen, und auf der anderen Seite die genannten elektrischen Personalisierungsmittel dieser Objekte, und dass der grafische Druckposten (50) an der Seite der ersten Seite des Trägers und der ersten Seite der zu personalisierenden Objekte angeordnet ist, so dass jedes vom Träger getragene Objekt sich beim Verschieben des Trägers in Bezug auf den grafischen Druckposten oder umgekehrt gleichzeitig zwischen einem der elektrischen Personalisierungsmittel (40) und dem genannten grafischen Druckposten (50) befindet, wobei das elektrische Personalisierungsmittel (40) und der grafische Druckposten (50) mindestens teilweise gleichzeitig auf dieses Objekt einwirken.

2. Ausrüstung gemäß Anspruch 1, **dadurch gekennzeichnet, dass** der Träger (3) ortsfest und der grafische Druckposten (5) mobil ist.

3. Ausrüstung gemäß Anspruch 1, **dadurch gekennzeichnet, dass** der Träger (3) mobil und der grafische Druckposten (5) ortsfest ist.

4. Ausrüstung gemäß einem der Ansprüche 1 bis 3, **dadurch gekennzeichnet, dass** der Träger (3) eine Trommel ist, beispielsweise mit etwa horizontaler Rotationsachse.

5. Ausrüstung gemäß einem der Ansprüche 1 bis 4, **dadurch gekennzeichnet, dass** die elektrischen Personalisierungsmittel (40) der Karten elektrische Kontakte umfassen, die mit den Plätzen der Chips (30) der auf dem Träger (3) angeordneten zu personalisierenden Objekte (1) in Kontakt stehen.

6. Ausrüstung gemäß einem der Ansprüche 1 bis 5, **dadurch gekennzeichnet, dass** die elektrischen Personalisierungsmittel (40) der Objekte (1) Antennen umfassen, die gegenüber den Plätzen der Chips (30) der auf dem Träger (3) angeordneten Objekte (1) angebracht sind und die gegenüber dem grafischen Druckposten (50) liegen.

7. Ausrüstung gemäß einem der Ansprüche 1 bis 6, **dadurch gekennzeichnet, dass** sie eine grafische (9) und/oder elektrische Kontrollvorrichtung (8) der zu personalisierenden Objekte (1) und/oder eine Trockenvorrichtung (51) des Drucks umfasst.

8. Verfahren für die kontinuierliche Personalisierung von tragbaren intelligenten Objekten wie Chipkarten (1), wobei die genannten tragbaren Objekte auf einer ersten Seite grafisch und auf einer zweiten Seite elektrisch personalisierbar sind, **dadurch gekennzeichnet, dass** das genannte Verfahren Schritte umfasst, um die zu personalisierenden Objekte an Plätzen anzuordnen, die auf einer ersten Seite eines Trägers vorgesehen sind, so dass jedes tragbare Objekt elektrisch personalisiert werden kann über ein elektrisches Personalisierungsmittel (40), das auf einer zweiten Seite des Trägers angeordnet ist, um dann den Träger gegenüber einen grafischen Druckposten (50) zu verschieben, der an der Seite der ersten Seite des Trägers und der ersten Seite des zu personalisierenden Objekts angeordnet ist; wobei die Verschiebung derart erfolgt, dass sich jedes zu personalisierende Objekt gleichzeitig zwischen einem elektrischen Personalisierungsmittel (40) und dem grafischen Druckposten (50) befindet, so dass das genannte Mittel (40) und der genannte Posten (50) mindestens teilweise gleichzeitig auf das zu personalisierende Objekt einwirken.

9. Verfahren gemäß Anspruch 8, **dadurch gekennzeichnet, dass** die elektrische Personalisierung (40) komplett während des grafischen Drucks (50) erfolgt.
